# EUROPEAN PATENT SPECIFICATION

(11) **EP 0 271 313 B1**
(45) Date of publication and mention of the grant of the patent: **09.06.1993**
(21) Application number: 87310767.6
(22) Date of filing: 08.12.1987
(51) Int. Cl.: G02F 1/133

(54) **Liquid crystal display device**
Flüssigkristallanzeigevorrichtung
Dispositif de visualisation à cristaux liquides

(30) Priority: 08.12.1986 JP 292097/86; 09.11.1987 JP 282748/87
(43) Date of publication of application: 15.06.1988
(73) Proprietor: SHARP KABUSHIKI KAISHA, Osaka 545 (JP)
(72) Inventor: Katayama, Mikio, Ikoma-shi Nara-ken (JP); Tanaka, Hirohisa, Ikoma-gun Nara-ken (JP); Shimada, Yasunori, Nara-ken (JP); Morimoto, Hiroshi, Kitakatsuragi-gun Nara-ken (JP)
(74) Representative: Huntingford, David Ian

(56) References cited:
- EP-A- 0 179 915
- US-A- 4 448 491
- US-A- 4 601 097
- PATENT ABSTRACTS OF JAPAN, vol. 7, no. 286 (P-244)[1431], 21st December 1983; & JP-A-58 159 520 (SUWA SEIKOSHA K.K.) 21-09-1983

## Description

This invention relates to a liquid-crystal display device using liquid crystals therein. More particularly, it relates to an active-matrix display device utilizing a thin-film transistor as a switching device.

In recent years, amorphous silicon (a-Si) has been used as a material that constitutes a thin-film transistor functioning as a switching device for driving liquid-crystal display devices.

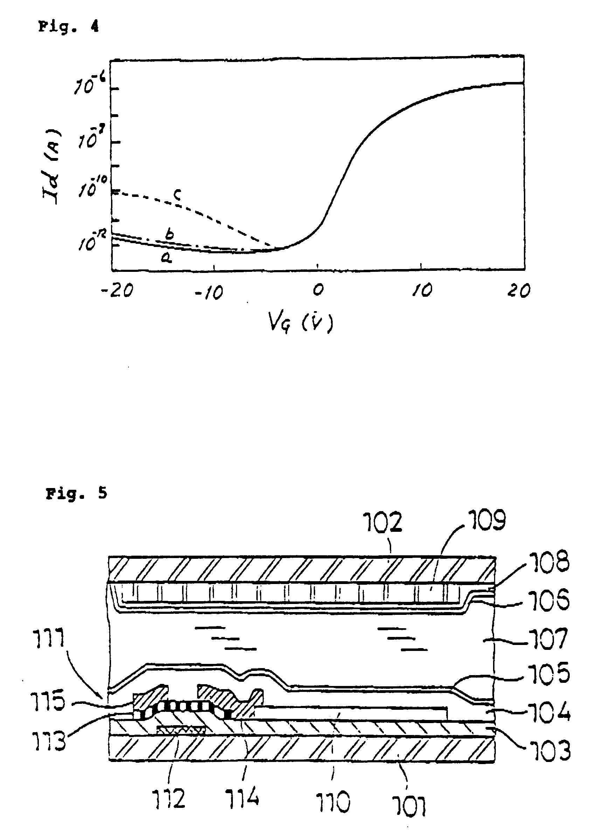

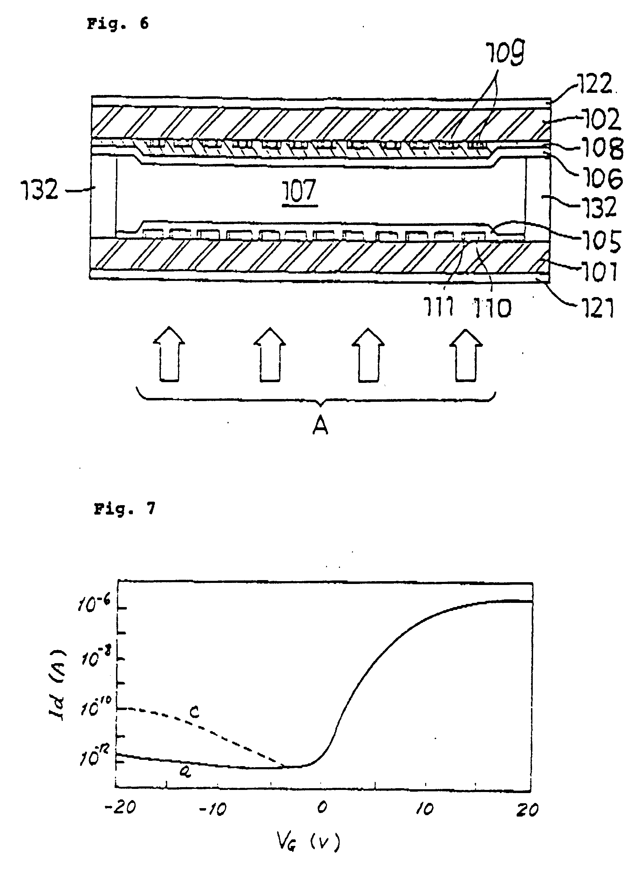

Figure 5 of the accompanying drawings shows a conventional liquid-crystal display device, which comprises a pair of transparent insulating substrates 101 and 102, a thin-film transistor 111 disposed on the inner surface of the transparent insulating substrate 101, a picture-element transparent electrode 110 connected to the thin-film transistor 111 on the transparent insulating substrate 101, a protective layer 104 disposed on both the thin-film transistor 111 and the picture-element transparent electrode 110, colour filters 109 disposed on the inner surface of the transparent insulating substrate 102, a counter transparent-electrode 108 disposed on the colour filters 109, a pair of liquid crystal-orientating films 105 and 106 disposed on the protective layer 104 and the counter transparent-electrode 108, respectively, and a liquid-crystal disposed between the liquid crystal-orientating films 105 and 106. The thin-film transistor 111 comprises a metal layer 112 constituting a gate electrode and gate bus lines, a gate insulating layer 103, an a-Si semiconductor layer 113, a metal layer 114 constituting a drain electrode, and a metal layer 115 constituting a source electrode and source bus lines. Voltage is applied to the liquid crystal 107 positioned between the transparent electrodes 108 and 110 by switching-operation of the thin-film transistor 111. Figure 6 shows a conventional active-matrix display device, which comprises the above-mentioned liquid-crystal display device, a pair of polarizing plates 121 and 122 disposed on the outer surfaces of the transparent insulating substrates 101 and 102, respectively, of the said liquid-crystal display device. The thin-film transistors 111 are irradiated with light A from a back light disposed behind the polarizing plate 121.

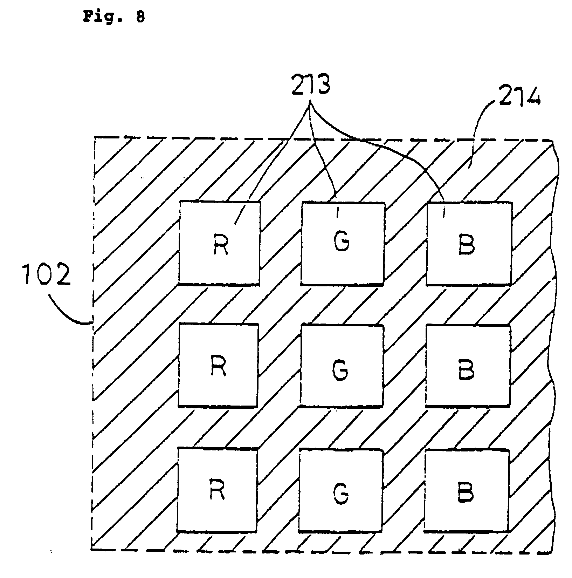

The above-mentioned liquid-crystal display device has the following disadvantages:
First, the current-voltage characteristics of the thin-film transistor 111 using a a-Si vary with irradiated light, because the electrical conductivity of a-Si increases with irradiated light. Figure 7 shows the current-voltage characteristics of the thin-film transistor 111 with a-Si, in which the abscissa indicates the gate voltage, the ordinate indicates the drain current, curve a indicates the current-voltage characteristics at the time when the thin-film transistor is not irradiated with light, and curve c indicates the current-voltage characteristics at the time when the thin-film transistor is irradiated with light. It can be seen from Figure 7 that the resistance of the thin-film transistor in the off-state is lowered by irradiation with light from the back light, which causes difficulties in the normal switching operation of the thin-film transistor. As a result, the liquid-crystal display device creates a poor quality imate. In order to solve this problem, a light-shielding substance has been placed over the chanel of the thin-film transistor. However, light from the back light reaches the thin-film transistor 111 of the display device since the light only decays to about 40% due to the polarizing plate 121, although exterior light does not reach the thin-film transistor 111 since it decays sufficiently due to the poolarizing plate 122 and a black striped film 214 (Figure 8) formed on the colour filters 109. Thus, optoelectric current occurs in the thin-film transistor 111, which causes a lowering of the resistance of the thin-film transistor 111 in the off-state.

Secondly, light A from the back light passes through the liquid-crystal display device, and the transmitted light can be seen through the colour (red, green and blue) filters 109. A part of the light A from the back light passes through the gap between the picture elements constituting the red, green and blue colours of each colour filter 109, which causes difficulties in the formation of distinct and contrasting images. In order to solve this problem, as shown in Figure 8, a metal such as Cr, etc., is vaporized among the red, green and blue picture elements 213 on the colour filter-sided substrate 102, resulting in a black striped film 214 that prevents light from passing through the gap between the picture elements 213. However, the formation of such a black striped film 214 results in the following problems: the accuracy of the positional adjustment between the front display panel on which the colour filters are formed and the rear display panel on which active devices such as thin-film transistors are formed must be about 10µm or less, so that the line width of the black stripe 214 must be wider, by the above-mentioned value of about 10µm or less, than the gap between the picture elements disposed an the panel at the active device side. Accordingly, the area of each of the picture elements decreases, resulting in a decrease in the amount of transmitted light (i.e., a decrease in the transmissivity (i.e., the brightness) of the front panel).

There is also known from EP-A-O179915 a liquid crystal display device in which the individual thin-film transistors are disposed over opaque metal areas for the purpose of protecting these transistors from direct light irradiation. However, the opaque metal areas are formed on the supporting substrate only on the areas of the substrate where the thin-film transistor are to be formed so that the light shielding effect is limited. As a result, the device of EP 0179915 also requires a light blocking layer around the colour filters disposed on a counter substrate.

JP-A-58 159 520 and US-A- 4601097 describe similar arrangements to that of EP-A-0179915 in which light shielding films made, for example, of metal or metallic silicide are disposed only over the specific regions of the substrates carrying the thin film transistors.

It is an object of the present invention to provide an active-matrix display device which overcomes the above-discussed and other disadvantages and deficiencies of the known devices.

An active-matrix display device in accordance with the present invention comprises a plurality of picture-element transparent electrodes and a plurality of thin-film transistors disposed to form a matrix on an insulating substrate, the transistors being shielded by means of a light-opaque layer, including a black striped film, so that they are entirely protected from being irradiated with light through said insulating substrate, colour filters located opposite to and facing said insulating substrate, and a liquid crystal layer sandwiched between said insulating substrate and said colour filters, characterised by said black striped film being disposed above said insulating substrate and having a plurality of aperture portions formed therein; each said thin-film transistor being formed over said black striped film, each of said plurality of thin-film transistors being disposed adjacent to a corresponding one of said plurality of aperture portions; the peripheral portion of each of said picture-element transparent electrodes being superimposed on a respective one of said aperture portions so as to completely surround that aperture portion; and said colour filters not having a black striped film disposed thereon.

In a preferred embodiment, the active-matrix display device further comprises a second black striped film, said second black striped film being disposed over said plurality of thin-film transistors and over a plurality of source electrodes and drain electrodes, on the opposite side thereof to said firstmentioned black striped film.

In a preferred embodiment, the black striped films are made of an amorphous silicon semiconductor film, a metal film or a black-coloured resin film.

In a preferred embodiment, the thin-film transistors are constructed with a reversed stagger structure.

Thus, the invention described herein makes possible the provision of (1) an active-matrix display device in which a black striped film made of an a-Si semiconductor film, a metal film or a black-coloured resin film is disposed between each thin-film transistor and the insulating substrate having the said transistor thereon in such a manner that the black striped film covers the entire area except for the picture-element electrodes, thereby preventing the said transistor from being irradiated with light from a back light placed behind the insulating substrate and preventing wrong operation of the said transistor; (2) an active-matrix display device in which the above-mentioned black striped film is not disposed on the colour filter-sided substrate, but it is disposed on the thin-film transistor-sided substrate, and accordingly the accuracy of the positional adjustment between the picture-element electrode and the black striped film does not depend upon the gap between the picture-elements of the colour filters, but depends upon the production accuracy of the black striped film and the patterning accuracy of the black striped film, so that the line width of the black stripe can be made narrower (that is, the area of each of the picture elements can be made larger), which causes an increase in the amount of transmitted light, namely an increase in the brighness of the front panel resulting in a high quality image; and (3) an active-matrix display device in which a high accuracy of the positional adjustment between the substrate at the thin-film transistor side and the substrate at the colour filter side is not required, resulting in an improved production yield of the active-matrix display device.

The invention is described further hereinafter, by way of example only, with reference to the accompanying drawings, in which:
Figure 1 is a side sectional view showing part of an active-matrix display device of this invention;
Figure 2 is a bottom view showing the positional relationship between the thin-film transistors and the picture-element transparent electrodes of an active-matrix display device in accordance with this invention;
Figure 3 is a side sectional view showing an active-matrix display device of this invention;
Figure 4 comprises characteristic curves showing thr relationship between the gate voltage and the drain current with regard to an active-matrix display device of this invention and a conventional active-matrix display device;
Figure 5 is a sectional side view showing a conventional liquid-crystal display device;
Figure 6 is a sectional side view showing a conventional active-matrix display device using a liquid-crystal display device;
Figure 7 comprises characteristic curves showing the relationship between the gate voltage and the drain current with regard to the convention active-matrix display device; and
Figure 8 is a plan view showing part of a conventional active-matrix display device.

### Example 1

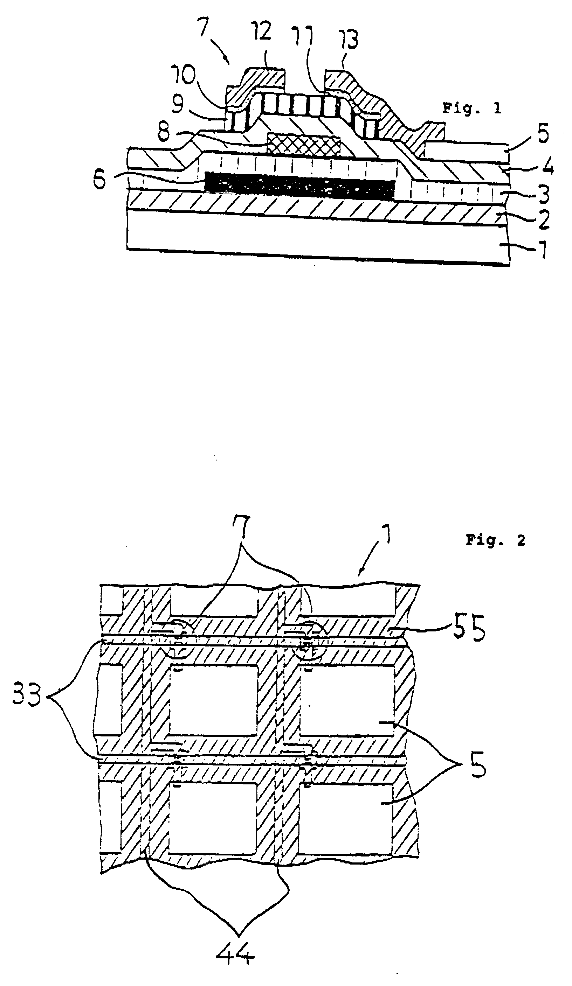

Figure 1 shows a part of an active-matrix display device of this invention, which comprises a glass substrate 1 as a rear display panel, thin-film transistors 7 disposed on the glass substrate 1, and picture-element transparent electrodes 5 connected to the thin-film transistors 7. Each of the thin-film transistors 7 comprises a gate electrode 8, a gate insulating layer 4, an a-Si semiconductor layer 9, phosphorus-doped a-Si layers 10 and 11, and source and drain electrodes 12 and 13. The thin-film transistor 7 is constructed with a reversed stagger structure in which the gate electrode 8 is positioned on the substrate side.

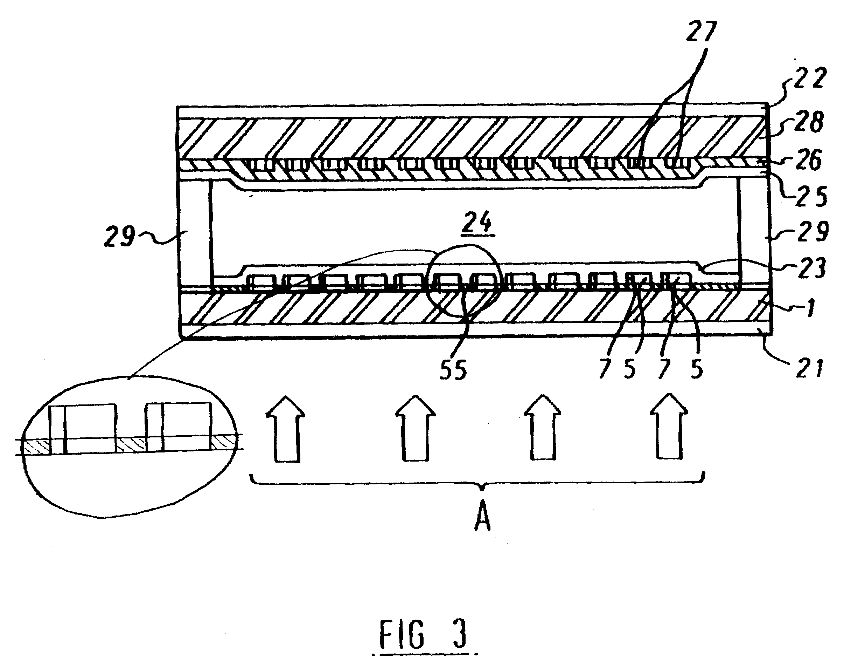

As shown in Figure 2, the thin-film transistors 7 and the picture-element transparent electrodes 5 are disposed in a matrix on the glass substrate 1. A black striped film 55 sandwiched between a pair of insulating films 2 and 3 is disposed between the thin-film transistor 7 and the glass substrate 1 in such a manner that the black striped film 55 covers the entire area except for the picture-element transparent electrodes 5.

The black striped film 55 is formed by patterning the a-Si semiconductor film 6 such that the a-Si semiconductor film 6 is disposed around the picture-element transparent electrodes 5 along the gate and source bus lines 33 and 44. Thus, only the black striped film 55 and the picture-element transparent electrodes 5 can be observed from the rear panel at the thin-film transistor side of the active-matrix display device. The edge portion of the black striped film 55 and the edge portion of each of the picture-element transparent electrodes 5 overlap by about 1-2µm so as to attain a given alignment accuracy therebetween. The thickness of the a-Si semiconductor film 6 constituting the black striped film 55 is set to be in the range of 0.1µm to 1.0µm, which is sufficiently thinner than the thickness of each thin-film transistor 7. By the black striped film 55, 99% of the amount of light from a back light placed at the transistor side can be absorbed, and accordingly the light that is incident upon the black striped film 55 is not transmitted to the colour filter side of the active-matrix display device.

The insulating films 2 and 3 that sandwich the a-Si semiconductor layer 6 therebetween function as an etching-stopping film when the a-Si semiconductor film 6 is patterned into a desired stripe by an etching technique.

The insulating films 2 and 3 are made of, for example, SiNx and Ta₂O₃, respectively.

Figure 3 shows the active-matrix display device having the above-mentioned picture-element transparent electrodes 5 and the thin-film transistors 7. This active-matrix display device comprises a pair of glass substrates 1 and 28, a pair of polarizing plates 21 and 22 disposed on the outer surfaces of the glass substrate 1 and 28, respectively, a plurality of thin-film transistors 7, disposed on the glass substrate 1 each of which is connected to a picture-element transparent electrode 5, a liquid crystal-orientating film 23 disposed on the glass substrate 1 including the thin-film transistors 7 and the picture-element transparent electroes 5, a plurality of colour filters 27 disposed on the glass substrate 28 a counter transparent electrode 26 disposed on the glass substrate 28 including the colour filters 27, a liquid crystal-orientating film 25 disposed on the counter transparent electrode 26, and a liquid crystal 24 disposed between the liquid crystal-orientating films 23 and 15. A back light is placed behind the polarizing plate 21 at the transistor side. The display device is irradiated with light A from the back light. The a-Si semiconductor film 6 (Figure 1) constituting the black striped film 55 (Figure 2), which is disposed between the thin-film transistor 7 and the glass substrate 1 in the above-mentioned manner, shields the thin-film transistors 7 from the irradiation with light from the back light.

Figure 4 shows the current-voltage characteristic curves attained by the thin-film transistor 7, wherein the abscissa indicates the gate voltage and the ordinate indicates the drain current, and moreover, curve a shows the current-voltage characteristics at the time when the thin-film transistor is not irradiated with light, curve b shows the current-voltage characteristics at the time when the thin-film transistor is irradiated with light from the back light, and curve c shows the current-voltage characteristics at the time when a conventional thin-film transistor having no light-shielding film of an a-Si semiconductor layer is irradiated with light from the back light. Figure 4 indicates that the current-voltage characteristics of the thin-film transistor of this invention shown by curve b are the same as those of the thin-film transistor shown by curve a. This means that the transistor characteristics of the thin-film transistor of this invention in the irradiated state are the same as those of the thin-film transistor in the non-irradiated state and that even when the thin-film transistor of this invention is irradiated with light from a back light, the resistance thereof in the off-state does not decrease. The ratio of the resistance thereof in the off-state to that in the on-state is 10⁵ ohms or more. Therefore, the irradiation with light from a back light does not result in undesirable operation of the thin-film transistor of the active-matrix display device of this invention.

### Example 2

Instead of the a-Si semiconductor film 6 (Figure 1) of Example 1, a metal film having a thickness of 0.01-1.0µm or a black-coloured resin film having a thickness of 0.05-2-0µm is used for a black striped film and the same effects as those described in Example 1 can be attained.

### Example 3

The active-matrix display device of this invention is provided with a black striped film disposed over the upper portion including the source and drain electrodes of the thin-film transistor of Example 1 in the same manner as in Example 1, in addition to such a black striped film disposed between the thin-film transistor and the insulating substrate having the said transistor as described in Examples 1-2, thereby attaining the effect of more efficiently shielding light from the back light. Both black striped films are constituted by sandwiching an a-Si semiconductor film, a metal film or a black-coloured resin film between insulating films, as descried in Examples 1-2.

It is understood that various other modifications will be apprent to and can be readily made by those skilled in the art without departing from the scope of this invention as defined by the appended claims.

## Claims

1. An active-matrix display device comprising: a plurality of picture-element transparent electrodes (5) and a plurality of thin-film transistors (7) disposed to form a matrix on an insulating substrate (1), the transistors (7) being shielded by means of a light-opaque layer, including a black striped film, so that they are entirely protected from being irradiated with light through said insulating substrate (1),
colour filters (27) located opposite to and facing said insulating substrate (1), and
a liquid crystal layer (24) sandwiched between said insulating substrate (1) and said colour filters (27), characterised by:
said black striped film (55) being disposed above said insulating substrate and having a plurality of aperture portions formed therein;
each said thin-film transistor (7) being formed over said black striped film (55), each of said plurality of thin-film transistors (7) being disposed adjacent to a corresponding one of said plurality of aperture portions;
the peripheral portion of each of said picture-element transparent electrodes (5) being superimposed on a respective one of said aperture portions so as to completely surround that aperture portion; and
said colour filters (27) not having a black striped film (55) disposed thereon.

2. An active-matrix display device according to claim 1, further comprising a second black striped film, said second black striped film being disposed over said plurality of thin-film transistors (7) and over a plurality of source electrodes (12) and drain electrodes (13), on the opposite side thereof to the firstmentioned black striped film (55).

3. An active-matrix display device according to claim 1 or 2, wherein said firstmentioned black striped film (55) is made of an amorphous silicon semi-conductor film, a metal film or a black-coloured resin film.

4. An active-matrix display device according to claim 1, 2 or 3 wherein said thin-film transistors (7) are constructed with a reversed stagger structure in which the gate electrode (8) is positioned on the substrate (1) side.

## Patentansprüche

1. Aktivmatrix-Anzeigevorrichtung mit:
einer Mehrzahl von durchsichtigen Bildelement-Elektroden (5) und einer Mehrzahl von Dünnschicht-Transistoren (7), die zur Bildung einer Matrix auf einem isolierenden Substrat (1) angeordnet sind, wobei die Transistoren (7) mit Hilfe einer lichtundurchlässigen Schicht, einschließlich einer schwarzen Streifenschicht, abgeschirmt sind, so daß sie vollständig gegen eine Bestrahlung mit Licht durch das isolierende Substrat (1) geschützt sind,
Farbfilter (27), die dem isolierenden Substrat (1) gegenüberliegend und diesem zugewandt angeordnet sind, und
einer Flüssigkristall-Schicht (24), die zwischen das isolierende Substrat (1) und die Farbfilter (27) zwischengeschichtet ist, **dadurch gekennzeichnet**, daß
die schwarze Streifenschicht (55) über dem isolierenden Substrat angeordnet ist und eine Mehrzahl von darin gebildeten Öffnungsbereichen aufweist;
jeder Dünnschicht-Transistor (7) über der schwarzen Streifenschicht (55) gebildet ist, wobei jeder aus der Mehrzahl der Dünnschicht-Transistoren (7) benachbart zu einem entsprechenden aus der Mehrzahl der Öffnungsbereiche angeordnet ist;
der Randbereich von jeder der durchsichtigen Bildelement-Elektroden (5) über einen entsprechenden der Öffnungsbereiche gelegt ist, um diesen Öffnungsbereich vollständig zu umschließen; und
die Farbfilter (27) keine darauf angeordnete schwarze Streifenschicht (55) haben.

2. Aktivmatrix-Anzeigevorrichtung nach Anspruch 1, weiterhin mit einer zweiten schwarzen Streifenschicht, wobei die zweite schwarze Streifenschicht über der Mehrzahl von Dünnschicht-Transistoren (7) und über einer Mehrzahl von Source-Elektroden (12) und Drain-Elektroden (13), auf der gegenüberliegenden Seite der zuerst genannten schwarzen Streifenschicht (55) angeordnet ist.

3. Aktivmatrix-Anzeigevorrichtung nach Anspruch 1 oder 2, wobei die zuerst genannte schwarze Streifenschicht (55) aus einer amorphen Silicium-Halbleiterschicht, einer Metallschicht oder einer schwarzgefärbten Kunstharzschicht hergestellt ist.

4. Aktivmatrix-Anzeigevorrichtung nach Anspruch 1, 2 oder 3, wobei die Dünnschicht-Transistoren (7) in einer umgekehrt versetzten Struktur, in der die Gate-Elektrode (8) auf der Substrat-(1)-Seite angeordnet ist, gestaltet sind.

## Revendications

1. Un dispositif de visualisation à matrice active comprenant:
une pluralité d'électrodes transparentes éléments d'image (5) et une pluralité de transistors en forme de film mince (7) disposés de manière à former une matrice sur un substrat isolant (1), les transistors (7) étant protégés à l'aide d'une couche opaque à la lumière, comportant un film à rayures noir, de manière qu'ils soient complètement protégés contre l'irradiation par la lumière à travers ledit substrat isolant (1),
des filtres colorés (27) situés du côté opposé et face audit substrat isolant (1), et
une couche de cristaux liquides (24) prise en sandwich entre ledit substrat isolant (1) et lesdits filtres colorés (27), caractérisé en ce que:
ledit film à rayures noir (55) est disposé au-dessus dudit substrat isolant et présente une pluralité de parties d'ouverture formées dans celui-ci,
chaque dit transistor en forme de film mince (7) étant formé audessus dudit film à rayures noir (55), chacun de ladite pluralité de transistors en forme de film mince (7) étant disposé adjacent à une correspondante de ladite pluralité de parties d'ouverture,
la partie périphérique de chacune desdites électrodes transparentes éléments d'image (5) étant superposée à une respective desdites parties d'ouverture, de manière à entourer complètement ladite partie d'ouverture, et
lesdits filtres colorés (27) n'ayant pas de film à rayures noir (55) disposé sur eux.

2. Un dispositif de visualisation à matrice active suivant la revendication 1, comprenant, en outre, un second film à rayures noir , ledit second film à rayures noir étant disposé au-dessus de ladite pluralité de transistors en forme de film mince (7) et au-dessus d'une pluralité d'électrodes de source (12) et d'électrodes de drain (13), du côté opposé de ceux-ci par rapport au premier film à rayures noir (55).

3. Un dispositif de visualisation à matrice active suivant la revendication 1 ou 2, dans lequel ledit premier film à rayures noir (55) est réalisé en un film semi-conducteur de silicium amorphe, un film métallique ou un film de résine de couleur noire.

4. Un dispositif de visualisation à matrice active suivant la revendication 1, 2 ou 3, dans lequel lesdits transistors en forme de film mince (7) sont réalisés avec une structure étagée inversée dans laquelle l'électrode de grille (8) est positionnée du côté du substrat (1).
